# EUROPEAN PATENT APPLICATION

(11) **EP 3 454 444 A1**
(43) Date of publication of application: **13.03.2019**
(21) Application number: 17792750.6
(22) Date of filing: 28.04.2017
(51) Int. Cl.: H02J 7/00, B60R 16/033

(54) **POWER SUPPLY DEVICE**

(30) Priority: 02.05.2016 JP 2016092696
(71) Applicant: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: YAMASAKI, Hideo, Tokyo 105-8001 (JP); NIRASAWA, Hitoshi, Tokyo 105-8001 (JP); KASAI, Kazuyoshi, Tokyo 105-8001 (JP); ISHIWA, Koji, Tokyo 105-8001 (JP); MASAOKA, Toshihiko, Tokyo 105-8001 (JP)
(74) Representative: Hoffmann Eitle
(86) International application number: PCT/JP2017/017019
(87) International publication number: WO 2017/191818

(57) **Abstract**

An embodiment of the present invention is intended to provide a lightweight power supply device having less impact on the environment. The power supply device 1 of an embodiment includes a first storage battery BT1 connected between a positive electrode terminal PT and a negative electrode terminal MT; a second storage battery BT2 connected in parallel with the first storage battery BT1 between the positive electrode terminal PT and the negative electrode terminal MT; a first switch SW1 that switches connection between a positive electrode of the first storage battery BT1 and the positive electrode terminal PT; a second switch SW2 that switches connection between a positive electrode of the second storage battery BT2 and the positive electrode terminal PT; and a battery management device 10 that controls opening and closing of the first switch SW1 and the second switch SW2, wherein energy density of the first storage battery BT1 is equal to or greater than energy density of the second storage battery BT2, and wherein the first switch SW1 is normally closed and the second switch SW2 is normally open.

## Description

### FIELD

Embodiments hereinafter relate generally to a power supply device.

### BACKGROUND

Lead-acid storage batteries are relatively inexpensive and charge/discharge-management thereof is easy, which is why they are adopted as power supplies for various devices. Vehicle-mounted electrical components or automotive ECUs (Electric Control Units), for example, are configured to operate under the usage of 12 V lead-acid storage batteries as power supplies. However, lead-acid storage batteries required periodic replacement due to the deterioration. Also, since lead-acid storage batteries have a large weight with respect to capacity and take time to charge, it was difficult to use them as power supplies for portable devices or power supplies for driving electric vehicles.

In recent years, there has been a desire to reduce the amount of waste and limit the use of harmful substances when disposing vehicles. In 2000/53/EC (ELV directive) enacted in September 2000, lead is designated as prohibited material.

Meanwhile, lithium ion storage batteries are excellent in input/output performance and have a small weight with respect to capacity, which is why they are used as power supplies for portable devices and as power supplies for driving electric vehicles. However, lithium-ion storage batteries may, as cells, burst and catch fire when the internal temperature rises due to overcharging, which is why, generally, monitoring the voltage and current of each cell so as not to reach the state of overcharge is preferred. Whenever the lithium-ion battery cells, which are constantly being monitored, exceed a predetermined voltage, current, or state of charge (SOC), a control to suppress the charging voltage and charging current is executed; and when the cells exceed a predetermined voltage, current, or SOC, a control to open a means for opening/closing disposed between the main circuit and the battery is executed.

### CITATION LIST

### PATENT LITERATURE

[Patent Literature 1] Japanese Patent No. 5493616
[Patent Literature 2] Jpn. Pat. Appln. KOKAI Publication No. 2014-200123

### SUMMARY

When using, as an example, a lithium ion storage battery as a power source for an electrical component in a vehicle or for an automotive ECU, and the state of overcharge or over-discharge is reached, the lithium ion storage battery and main circuit are disconnected, and the power supply to the automotive ECU is cut off.

An embodiment of the present invention has been made in view of the aforementioned circumstances, and is intended to provide a lightweight power supply device having less impact on the environment.

The power supply device of an embodiment comprises a first storage battery connected between a positive electrode terminal and a negative electrode terminal; a second storage battery connected in parallel with the first storage battery between the positive electrode terminal and the negative electrode terminal; a first switch that switches connection between a positive electrode of the first storage battery and the positive electrode terminal; a second switch that switches connection between a positive electrode of the second storage battery and the positive electrode terminal; and a battery management device that controls opening and closing of the first switch and the second switch,
wherein energy density of the first storage battery is equal to or greater than energy density of the second storage battery, and wherein the first switch is normally closed and the second switch is normally open.

### BRIEF DESCRIPTION OF THE DRAWINGS

FIG. 1 is a diagram explaining an example configuration of a power supply device according to the embodiment.
FIG. 2 is a diagram showing an example relationship between the SOC of a first storage battery and the striking current performance of the power supply device.

### DETAILED DESCRIPTION

The power supply device according to an embodiment will be described hereinafter with reference to the drawings.

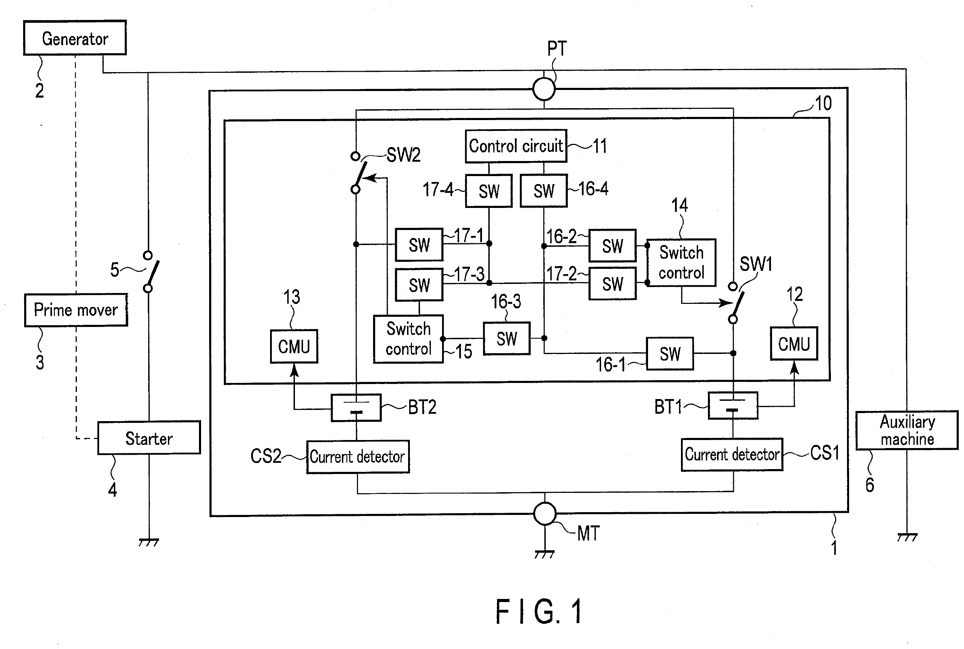

FIG. 1 is a diagram explaining an example configuration of a power supply device according to the embodiment.

The power supply device 1 according to the embodiment is, for example, mounted on a vehicle. The vehicle includes the power supply device 1, a generator 2, a prime mover 3, a starter motor 4, a switch 5, and an auxiliary machine 6.

The prime mover 3, for example, is an internal combustion engine that generates mechanical energy for driving a vehicle.

The generator 2 is a generator converting mechanical energy supplied from the prime mover 3 into electric energy, and can generate, for example, AC power and convert it to DC.

The starter motor 4 can supply power when the prime mover 3 is activated. The starter motor 4 is connected to a main circuit via the switch 5. Note that the starter motor 4 may be a generator (Integrated Starter Generator (ISG)) with a motor function.

The switch 5 can be switched electrically between connect and disconnect; it is connected when the prime mover 3 is activated. When the ignition is off or when running normal, or during idling stop of the vehicle, the switch 5 cuts off the electrical connection between the starter motor 4 and the main circuit. The switch 5 is controlled to switch between connect and disconnect by, for example, a control signal from the automotive ECU.

The auxiliary machine 6 is a vehicle-mounted electrical component. The auxiliary machine 6 uses electric power supplied from the power supply as power source. In other words, the starter motor 4 and the auxiliary machine 6 in the vehicle according to the embodiment are loads of the power supply device 1.

The power supply device 1 includes a first storage battery BT1, a second storage battery BT2, a first switch SW1, a second switch SW2, current detectors CS1 and CS2, a battery management device 10, a positive electrode terminal PT, and a negative electrode terminal MT. The positive electrode terminal PT of the power supply device 1 is electrically connected to the main circuit (12 V system). The negative electrode terminal MT of the power supply device 1 is grounded.

The first storage battery BT1 is an assembled battery including a plurality of lithium ion battery cells (not shown) . The positive electrode terminal of the first storage battery BT1 is electrically connected to the positive electrode terminal PT of the power supply device 1 via the battery management device 10. The negative electrode terminal of the first storage battery BT1 is electrically connected to the negative electrode terminal MT of the power supply device 1.

The current detector CS1 detects the charging current and the discharging current of the first storage battery BT1 and provides the detection result to the battery management device 10.

The second storage battery BT2 is an assembled battery including a plurality of lithium ion battery cells (not shown) . The positive electrode terminal of the second storage battery BT2 is electrically connected to the positive electrode terminal PT of the power supply device 1 via the battery management device 10. The negative electrode terminal of the second storage battery BT2 is electrically connected to the negative electrode terminal MT of the power supply device 1.

The current detector CS2 detects the charging current and the discharging current of the second storage battery BT2 and supplies the detection result to the battery management device 10.

The first storage battery BT1 and the second storage battery BT2 are connected in parallel to each other. The energy density (weight energy density and volumetric energy density) of the first storage battery BT1 is equal to or greater than the energy density (weight energy density and volumetric energy density) of the second storage battery BT2. The first storage battery BT1 desirably has characteristics suitable for low current discharge for a longer period than the second storage battery BT2. The second storage battery BT2 is constituted of a plurality of battery cells having an input/output density equal to or greater than the plurality of battery cells of the first storage battery BT1, and it desirably has characteristics which are suitable for charging with a large current, such as a charging current, from the generator 2, or for discharging with a large current. The first storage battery BT1 and the second storage battery BT2 are configured so that the circuit voltage (open circuit voltage (OCV)) for the SOC is substantially equal.

The first switch SW1 is interposed in a path connecting the positive electrode of the first storage battery BT1 to the positive electrode terminal PT of the power supply device 1, and it can electrically connect or disconnect the first storage battery BT1 and the positive electrode terminal PT. The first switch SW1, for example, is a normally closed switching means that may be constituted of an electromagnetic-type relay. Note that it is possible to reduce power consumption in the first switch SW1 by using the first switch SW1 as a self-maintaining relay. The state of connection of the first switch SW1 is switched by the first switch control circuit 14.

The second switch SW2 is interposed in a path connecting the positive electrode of the second storage battery BT2 and the positive electrode terminal PT of the power supply device 1, and can electrically connect or disconnect the second storage battery BT2 and the positive electrode terminal PT. The second switch SW2 is, for example, a normally open switching means which may be constituted by an electromagnetic relay or a semiconductor switch such as a field effect transistor (FET) . Note that power consumption in the second switch SW2 can be reduced by using the second switch SW2 as a self-maintaining relay. The state of connection of the second switch SW2 is switched by the second switch control circuit 15.

While the vehicle is parked, the first storage battery BT1 supplies power to the auxiliary machine 6 via the first switch SW1. Upon startup of the prime mover 3, the automotive ECU, which is the host control device, notifies the control circuit 11 of the battery management device 10 that the ignition has been turned on. In response to the ignition being turned on, the control circuit 11 connects the second storage battery BT2 to the main circuit by controlling the second switch control circuit 15, so that power can then be supplied from the first storage battery BT1 and the second storage battery BT2 to the starter motor 4 and the auxiliary machine 6.

After the start of the prime mover 3, the first storage battery BT1 and the second storage battery BT2 can be charged by the generator 2. Further, at the time of idling stop, the switch 5 is in the open (off) state. When the prime mover 3 is restarted from the idling stop state, the switch 5 is in a closed (on) state, allowing discharge from the first storage battery BT1 and the second storage battery BT2 to the starter motor 4 and the auxiliary machine 6.

The battery management device 10 comprises a control circuit 11, a first cell monitoring circuit (Cell Monitoring Unit (CMU)) 12, a second cell monitoring circuit (CMU) 13, a first switch control circuit 14, a second switch control circuit 15, and power changeover switches 16-1, 2, 3, 4, 17-1, 2, 3, 4.

The first cell monitoring circuit 12 periodically detects the voltage of each of the plurality of battery cells of the first storage battery BT1 and the temperature in the vicinity of the plurality of battery cells. The first cell monitoring circuit 12 provides the detected voltage and temperature values to the control circuit 11.

The second cell monitoring circuit 13 periodically detects the voltage of each of the plurality of battery cells of the second storage battery BT2 and the temperature in the vicinity of the plurality of battery cells. The second cell monitoring circuit 13 provides the detected voltage and temperature values to the control circuit 11.

The control circuit 11 comprises at least one processor such as a central processing unit (CPU) or a micro processing unit (MPU), and a memory. The control circuit 11 uses the current values detected by the current detectors CS1 and CS2 and the voltage and temperature values detected by the first cell monitoring circuit 12 and by the second cell monitoring circuit 13 to calculate the SOCs of the first storage battery BT1 and the second storage battery BT2. When calculating the SOCs of the first storage battery BT1 and of the second storage battery BT2 respectively, the accuracy of the calculation of the SOCs can be improved by using the current values detected by the current detectors CS1 and CS2. The control circuit 11 may also be configured to be capable of detecting the voltage of the positive electrode terminal PT.

Based on the control signal from the automotive ECU (host control device) not shown in the drawings and the calculated SOCs, the control circuit 11 controls the first cell monitoring circuit 12, the second cell monitoring circuit 13, the first switch control circuit 14, the second switch control circuit 15, the first switch SW1, the second switch SW2, and the power changeover switches 16-1, 2, 3, 4, 17-1, 2, 3, 4. The control circuit 11 is operable by a power supply provided from either the first storage battery BT1 or the second storage battery BT2 .

The power changeover switches 16-1, 2, 3, 4 switch the power supply from the first storage battery BT1 to the first switch control circuit 14, to the second switch control circuit 15, and to the control circuit 11 on and off . The power changeover switch 16-1 switches the power supply from the first storage battery BT1 to the first switch control circuit 14, to the second switch control circuit 15, and to the control circuit 11 on and off. The power changeover switch 16-2 is interposed between the power changeover switch 16-1 and the first switch control circuit 14, and switches the power supply from the first storage battery BT1 to the first switch control circuit 14 on and off. The power changeover switch 16-3 is interposed between the power changeover switch 16-1 and the second switch control circuit 15, and switches the power supply from the first storage battery BT1 to the second switch control circuit 15 on and off. The power changeover switch 16-4 is interposed between the power changeover switch 16-1 and the control circuit 11, and switches the power supply from the first storage battery BT1 to the control circuit 11 on and off.

The power changeover switches 17-1, 2, 3, 4 switch the power supply from the second storage battery BT2 to the first switch control circuit 14, to the second switch control circuit 15, and to the control circuit 11 on and off . The power changeover switch 17-1 switches the power supply from the first storage battery BT2 to the first switch control circuit 14, to the second switch control circuit 15, and to the control circuit 11 on and off. The power changeover switch 17-2 is interposed between the power changeover switch 17-1 and the first switch control circuit 14, and switches the power supply from the second storage battery BT2 to the first switch control circuit 14 on and off. The power changeover switch 17-3 is interposed between the power changeover switch 17-1 and the second switch control circuit 15, and switches the power supply from the second storage battery BT2 to the second switch control circuit 15 on and off. The power changeover switch 17-4 is interposed between the power changeover switch 17-1 and the control circuit 11, and switches the power supply from the second storage battery BT1 to the control circuit 11 on and off.

When the power changeover switches 16-1, 2, 3, 4 are conducting, power is supplied from the first storage battery BT1 to the first switch control circuit 14, to the second switch control circuit 15, and to the control circuit 11. When the power changeover switches 17-1, 2, 3, 4 are conducting, power is supplied from the second storage battery BT2 to the first switch control circuit 14, to the second switch control circuit 15, and to the control circuit 11.

Note that in principle, power is supplied from the first storage battery BT1 to the first switch control circuit 14. Also in principle, power is supplied from the second storage battery BT2 to the second switch control circuit 15. In other words, the power changeover switches 16-1, 2, 17-1, 3 are on, while the power changeover switches 16-3, 17-2 are off. When the control circuit 11 is driven, at least one of the power changeover switches 16-4, 17-4 is on. When the vehicle is parked (ignition is off), the first switch control circuit 14 and the second switch control circuit 15 may be activated in low power consumption mode (standby).

Next, the operations of the power supply device 1 will be described.

When the vehicle is parked (ignition is off), the first switch SW1 is closed (on) and the second switch SW2 is open (off). By setting this state, the exciting current of the relays of the first switch SW1 and the second switch SW2 can be suppressed, and the power consumption can be reduced. While the switch 5 is in the open (off) state, the starter motor 4 is disconnected from the main circuit. Thus, while the vehicle is parked, only the first storage battery BT1 is electrically connected to the main circuit via the positive electrode terminal PT, and power is supplied from the first storage battery BT1 to the auxiliary machine 6.

Even during the time in which the vehicle is parked, the control circuit 11 acquires the voltage and current values of the battery cells of the first storage battery BT1 and of the second storage battery BT2 from the current detectors CS1, CS2 and from the cell monitoring circuits 12, 13, and periodically calculates the SOCs of the first storage battery BT1 and of the second storage battery BT2. Note that the cycle in which the control circuit 11 calculates the SOC may be different between the time in which the vehicle is being driven (ignition is on) and the time in which the vehicle is parked. Since the change in the SOCs of the first storage battery BT14 and the second storage battery BT2 is small during the time in which the vehicle is parked, the SOCs may be calculated for a longer time than the time of driving.

When parking the vehicle for a long time, discharging of the first storage battery BT progresses and the voltage difference (SOC difference) between the first storage battery BT1 and the second storage battery BT2 increases. When the voltage difference between the first storage battery BT1 and the second storage battery BT2 increases, and the second switch SW2 is closed and the first storage battery BT1 and second storage battery BT2 are connected in parallel, an inrush current flows from the second storage battery BT2 having a high voltage to the first storage battery BT1 having a low voltage, causing a failure of a switch (relay) or the like in the path.

To avoid this, the control circuit 11 closes the second switch SW2, when the voltage difference (or SOC difference) between the first storage battery BT1 and the second storage battery BT2 becomes equal to or greater than a predetermined threshold (difference upper limit value), to charge the first storage battery BT1 from the second storage battery BT2 and render the voltage difference (or SOC difference) between the first storage battery BT1 and the second storage battery BT2 less than a predetermined threshold (allowable difference value). The allowable difference value of the voltage difference (or SOC difference) between the first storage battery BT1 and the second storage battery BT2 is smaller than the difference upper limit value. The difference upper limit value is the difference value of the voltage (or SOC) that is sufficiently small so that a failure or the like does not occur due to the current flowing to one side when the first storage battery BT1 and the second storage battery BT2 are connected in parallel.

As described above, the first storage battery BT1 is charged by equalizing the voltages of the first storage battery BT1 and of the second storage battery BT2 during parking of the vehicle. Therefore, the discharge time of the power storage device 1 (first storage battery BT1) during parking of the vehicle can be prolonged, and it is possible, before starting the prime mover, to prevent the rush current from flowing from the second storage battery BT1 to the first storage battery BT1 when the second switch SW2 is closed (turned on).

To suppress an inrush current to the first storage battery BT1 when the second switch SW2 is closed (turned on), the control circuit 11, for example, when the ignition is turned from off to on and the prime mover 3 is started, closes (turns on) the second switch SW2 and opens (turns off) the first switch SW1. Then, after the prime mover 3 is started, the control circuit 11 closes (turns on) the first switch SW1 as soon as (or after) the generator 2 starts generating power, and by connecting the first storage battery BT1 and second storage battery BT2 in parallel, it becomes possible to suppress the occurrence of an inrush current to the first storage battery BT1.

Similarly, for example, the control circuit 11 closes (turns on) the first switch SW1 and opens (turns off) the second switch SW2. Then, after the prime mover 3 is started, the control circuit 11 closes (turns on) the second switch SW2 as soon as (or after) the generator 2 starts generating power, and by connecting the first storage battery BT1 and second storage battery BT2 in parallel, it becomes possible to suppress the occurrence of an inrush current to the second storage battery BT2.

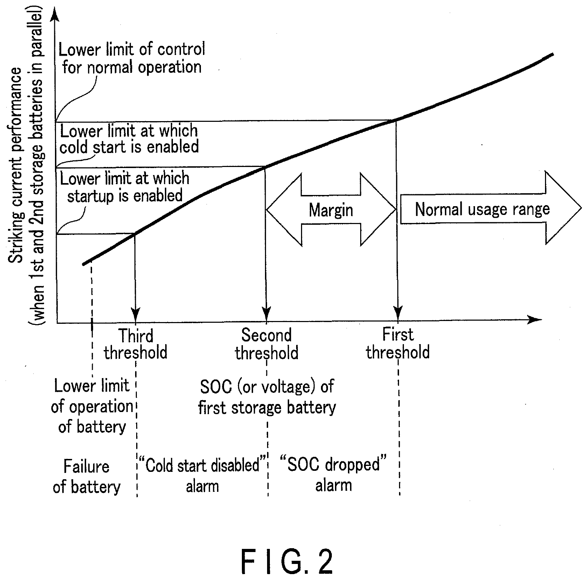

FIG. 2 is a diagram showing an example relationship between the SOC of the first storage battery and the striking current performance of the power supply device.

For example, if the vehicle keeps parking, there is a possibility that discharging of both the first storage battery BT1 and the second storage battery BT2 progresses. When the control circuit 11 determines, based on the calculated SOC values of the first storage battery BT1 and of the second storage battery BT2, that the SOC (or voltage) of the first storage battery BT1 is less than the control threshold value (first threshold value) for normally operating the power supply device 1, an alarm indicating "SOC dropped" is notified to the host control device. The control circuit 11 is capable of continuing to supply electric power from the first storage battery BT1 to the auxiliary machine 6 via the first switch SW1 even after notifying the host control device of an alarm indicating "SOC dropped".

When, after the alarm indicating "SOC dropped" is notified, the discharging of the first storage battery BT1 progresses, and the SOC (or voltage) of the first storage battery BT1 reaches a lower limit value (second threshold value) at which the power supply device 1 can be cold-started, the control circuit 11 notifies the host control device of an alarm indicating "cold start disabled" . The control circuit 11 is capable of continuing to supply power from the first storage battery BT1 to the auxiliary machine 6 via the first switch SW1 even after notifying the host control device of an alarm indicating "cold start disabled".

The first threshold value is with respect to the starting performance in the case where the first storage battery BT1 and the second storage battery BT2 are connected in parallel, and it has a margin with respect to the second threshold value that can be cold-started.

When the vehicle keeps parking, and the discharge of the first storage battery BT1 and the second storage battery BT2 progresses, and the SOC (or voltage) of the storage battery BT1 becomes less than the lower limit value (third threshold value) at which the power supply device 1 can be started based on the calculated values of the SOC of the first storage battery BT1 and the SOC of the second storage battery BT2, the control circuit 11 notifies the host control device of a value indicating failure of the power supply device 1. In this case, the control circuit 11 keeps the first switch SW1 closed (on) and continuously supplies power to the auxiliary machine 6 from the first storage battery BT1 via the first switch SW1, so that the host control device is capable of preventing the prime mover 3 from starting.

After the SOC (or voltage) of the first storage battery BT1 becomes less than the third threshold value, the control circuit 11 keeps the second switch SW2 open (off) and may maintain the SOC (or voltage) of the second storage battery BT2 . Note that the value of the lower limit SOC at which the first storage battery BT1 can discharge is smaller than the third threshold value.

Next, the operations when charging the power supply device 1 will be described.

The example case will be described in which the power supply device 1 is charged while the vehicle is parking. When the vehicle is parked (ignition is off), the first switch SW1 is closed (on) and the second switch SW2 is open (off). By connecting a charger (not shown) to the main circuit, a charging current is supplied to the first storage battery BT1.

The control circuit 11 controls the first storage battery BT1 so that it does not overcharge from the value of the voltage supplied from the first cell monitoring circuit 12 and from the value of the current supplied from the current detector CS1. Similarly, the control circuit 11 controls the second storage battery BT2 so that it does not overcharge from the value of the voltage supplied from the second cell monitoring circuit 13 and from the value of the current supplied from the current detector CS2.

More specifically, when excessive voltage is applied from the externally connected charger to the main circuit and charging control as a vehicle is not performed, the voltage of the battery cells constituting the first storage battery BT1 increases, the battery may be in a dangerous situation due to the overcharging, and the control circuit 11 and the switch control circuit 14 using the first storage battery BT1 as a power supply may not function properly. Therefore, the control circuit 11 according to the present embodiment does not use the first storage battery BT1 as a power supply when excessive voltage is applied to the main circuit as described above, but uses the second storage battery BT2 as a power supply to activate the switch control circuit 14 and ensure reliable operation of the first switch control circuit 14.

In other words, when the voltage of the first storage battery BT1 exceeds a predetermined threshold (second overcharge threshold) or when the voltage (or SOC) of any one of the plurality of battery cells constituting the first storage battery BT1 exceeds a predetermined threshold value (second overcharge threshold), the first switch control circuit 14 that controls the opening and closing (on and off) of the first switch SW1 is activated by using the second storage battery BT2 as a power supply. By operating the power changeover switches 17-1, 2, 3, 4 and the power changeover switches 16-1, 2, 3, 4, the control circuit 11 stops the power supply from the first storage battery BT1 to the switch control circuit 14, supplies power from the second storage battery BT2 to the switch control circuit 14, and activates the switch control circuit 14.

When, for example, the charging of the first storage battery BT1 progresses and the voltage (or SOC) of any one of the battery cells constituting the first storage battery BT1 increases to a state of overcharge (first overcharge threshold and beyond), the control circuit 11 disconnects the first storage battery BT1 from the main circuit by opening (turning off) the first switch SW1 using the first switch control circuit 14. In such a case, by closing (turning on) the second switch SW2 and charging the second storage battery BT2, it is both possible to keep charging the power supply device 1, and to keep providing power to the auxiliary machine 6. Note that the second overcharge threshold value may be smaller than the first overcharge threshold value, or larger or the same.

By performing, as described above, the charge control as a power supply device, it is possible to detect voltage abnormality of the first storage battery BT1, to avoid an unsafe situation due to overcharge, to provide a stable power supply from the second storage battery BT2 to the first switch control circuit 14, and to enable the first switch control circuit 14 to reliably perform control of the first switch SW1, so that overcharging of the first storage battery BT1 can be reliably avoided.

The control circuit 11 closes (turns on) the second switch SW2 to avoid overcharging of the first storage battery BT1, and, simultaneously opens (turns off) the first switch SW1, so that electric power can be stably supplied from the second storage battery BT2 to the auxiliary machine 6 even when the external charging stops.

When, for example, the power supply 1 is charged externally while the prime mover 3 is not starting, the first storage battery BT1 may be preferentially charged via the first switch SW1. In this case, if, on the basis of the voltage values supplied from the first cell monitoring circuit 12 and the second cell monitoring circuit 13, or on the basis of the current values supplied from the current detectors CS1 and CS2, the difference between the SOC (or voltage) of the storage battery BT1 and the second storage battery BT2 is equal to or greater than a predetermined threshold value (difference upper limit value), the control circuit 11 may close (turn on) the second switch SW2 and connect the second storage battery BT2 and the first storage battery BT1 in parallel to be capable of charging both the first storage battery BT1 and the second storage battery BT2.

In other words, the control circuit 11 can control the first switch SW1 and the second switch SW2 in accordance with the SOC (or voltage) of the first storage battery BT1 and the second storage battery BT2, charge either (or both) the first storage battery BT1 and the second storage battery BT2, and perform a control by which the difference between the SOC (or voltage) of the first storage battery BT1 and the second storage battery BT2 become less than a predetermined threshold value (allowable difference value).

As described above, according to the embodiment, it is possible to provide a lightweight power supply device that reduces the impact on the environment and that does not use any prohibited materials such as lead.

It is further possible to provide a power supply device that avoids overcharging even when using lithium ion storage batteries as the first storage battery BT1 and the second storage battery BT2, and that ensures safety.

With the power supply apparatus 1 according to the embodiment mounted to a vehicle, the power supply to the automotive ECU does not stop even if the power supply apparatus 1 is configured to supply power from the power supply apparatus 1 to the automotive ECU because it is possible to supply electric power from the second storage battery BT2 to the main circuit when being disconnected from the main circuit to avoid overcharge of the first storage battery BT1. The reliability of the vehicle can thus be ensured.

In the case where, for example, the vehicle is parking for a long time and it is necessary to supply power, even if just a faint one, to the auxiliary machine 6, the power supply device 1 according to the embodiment realizes low power consumption of the monitoring circuits 12 and 13 for monitoring the state of the battery cells of the first storage battery BT1 and second storage battery BT2, as well as of the switch control circuits 14 and 15 for controlling the operations of the first switch SW1 and the second switch SW2, and it is possible to keep the current consumption during parking low.

In the power supply device 1 according to the embodiment, the first storage battery BT1 and the second storage battery BT2 are connected in parallel, but it can avoid an inrush current to the low-voltage power supply by equalizing the SOC (or voltage) of the first storage battery BT1 and of the second storage battery BT2. Even when parking the vehicle for a long time, power can be supplied to the auxiliary machinery 6.

While several embodiments of the present invention have been described, these embodiments have been presented by way of example and are not intended to limit the scope of the invention. These novel embodiments can be implemented in various other forms and various omissions, substitutions, and changes can be made without departing from the spirit of the invention. These embodiments and modifications are within the scope and gist of the invention, and within the scope of what is claimed as well as any scope equivalent thereto.

## Claims

1. A power supply device comprising:
a first storage battery connected between a positive electrode terminal and a negative electrode terminal;
a second storage battery connected in parallel with the first storage battery between the positive electrode terminal and the negative electrode terminal;
a first switch that switches connection between a positive electrode of the first storage battery and the positive electrode terminal;
a second switch that switches connection between a positive electrode of the second storage battery and the positive electrode terminal; and
a battery management device that controls opening and closing of the first switch and the second switch,
wherein energy density of the first storage battery is equal to or greater than energy density of the second storage battery, and wherein the first switch is normally closed and the second switch is normally open.

2. The power supply device according to claim 1, wherein:
the first storage battery includes a plurality of first battery cells,
the second storage battery includes a plurality of second battery cells,
the battery management device includes a first cell monitoring circuit that detects and outputs voltages of the plurality of first battery cells, a second cell monitoring circuit that detects and outputs voltages of the plurality of second battery cells, a first switch control circuit that opens and closes the first switch, a second switch control circuit that opens and closes the second switch, and a control circuit that receives a voltage of the first battery cell and a voltage of the second battery cell, and controls the first cell monitoring circuit, the second cell monitoring circuit, the first switch control circuit, and the second switch control circuit, and
the control circuit, when the voltage of the first battery cell is equal to or greater than a first overcharge threshold value, opens the first switch and closes the second switch, or, when the voltage of the second battery cell is equal to or greater than the first overcharge threshold value, opens the second switch and closes the first switch to enable continuous power supply from the power supply device.

3. The power supply device according to claim 1, wherein:
the first storage battery includes a plurality of first battery cells,
the second storage battery includes a plurality of second battery cells,
the battery management device includes a first cell monitoring circuit that detects and outputs voltages of the plurality of first battery cells, a second cell monitoring circuit that detects and outputs voltages of the plurality of second battery cells, a first switch control circuit that opens and closes the first switch, a second switch control circuit that opens and closes the second switch, and a control circuit that receives a voltage of the first battery cell and a voltage of the second battery cell, and controls the first cell monitoring circuit, the second cell monitoring circuit, the first switch control circuit, and the second switch control circuit, and
the control circuit closes the first switch and the second switch when a difference between the voltage of the first storage battery and the voltage of the second storage battery is equal to or greater than a difference upper limit value.

4. The power supply device according to claim 2 or claim 3, further comprising a power changeover switch that switches a power supply supplying power to the first switch control circuit and to the second switch control circuit between the first storage battery and the second storage battery.

5. The power supply device according to claim 1, wherein:
the first storage battery includes a plurality of first battery cells,
the second storage battery includes a plurality of second battery cells,
the battery management device includes a first cell monitoring circuit that detects and outputs voltages of the plurality of first battery cells, a second cell monitoring circuit that detects and outputs voltages of the plurality of second battery cells, a first switch control circuit that opens and closes the first switch, a second switch control circuit that opens and closes the second switch, and a control circuit that receives a voltage of the first battery cell and a voltage of the second battery cell, and controls the first cell monitoring circuit, the second cell monitoring circuit, the first switch control circuit, and the second switch control circuit, and
the control circuit, when a SOC or voltage of the first storage battery becomes equal to or less than a first threshold value being lower limit of control for normal operation, outputs an SOC dropped alarm, and, when discharging progresses further and the SOC or voltage of the first storage battery becomes equal to or less than a second threshold value corresponding to a lower limit at which a cold start is enabled, outputs an alarm to disable cold start, and, when the discharging progresses even further and the SOC or voltage of the first storage battery becomes equal to or less than a third threshold value corresponding to a lower limit at which startup is enabled, notifies failure of the battery and keeps the first switch closed.

6. The power supply device according to any one of c laims 1 to 5, wherein the first switch and the second switch are self-maintaining relays.
